# EUROPEAN PATENT APPLICATION

(11) **EP 4 550 240 A1**
(43) Date of publication of application: **07.05.2025**
(21) Application number: 24207363.3
(22) Date of filing: 18.10.2024
(51) Int. Cl.: G06Q 10/20

(54) **FLEET MANAGEMENT ANALYTICS AND REMEDIATION**

(30) Priority: 30.10.2023 US 202363546420 P
(71) Applicant: Penske Truck Leasing Co., L.P., Reading, PA 19607 (US)
(72) Inventor: Haynes, Timothy C, Birdsboro, PA 19508 (US); Talwar, Rohit A, Reading, PA 19608 (US); Quinn, Michael James, Birmingham, MI 48009 (US); Toyoglu, Hunkar, Frisco, TX 75035 (US); Cetinok, Ali Ozgur, Chicago, IL 60654 (US)
(74) Representative: Murgitroyd & Company

(57) **Abstract**

A method and system for fleet management is described. Fleet management data for a target fleet of vehicles is received. A target vehicle vector that represents a target vehicle of the target fleet is generated based on the fleet management data. One or more similar vehicles are identified, from a plurality of reference vehicles, that are similar to the target vehicle using a distance metric between the target vehicle vector and a plurality of reference vehicle vectors. The plurality of reference vehicle vectors representing the plurality of reference vehicles. Vehicle characteristics of the target vehicle and the one or more similar vehicles are identified, where the vehicle characteristics affect vehicle efficiency of the target vehicle. The vehicle characteristics affecting vehicle efficiency of the target vehicle and corresponding vehicle characteristics of the one or more similar vehicles are displayed.

## Description

### RELATED APPLICATION

This application is related to and claims priority from United States Provisional Application No. 63/546,420, filed October 30, 2023, the disclosure of which is incorporated herein by reference in its entirety.

### FIELD OF THE INVENTION

The application related to fleet management, and, more particularly, to a method and system for analyzing fleet characteristics and developing proposed modifications thereto.

### BACKGROUND

Logistics, distribution, and delivery companies may utilize fleets of trucks for transporting goods. Fleets may have a few trucks, to several dozen, to hundreds of trucks of different types, which are managed by fleet managers. The goals of the fleet manager generally include reducing costs to operate or access assets (e.g., trucks, trailers, loading/unloading facilities, maintenance facilities, etc.), avoiding surprises and risks, and maximizing time during which the assets are working. The fleet managers also try to minimize or eliminate inefficiencies in obtaining data for achieving these goals.

Even though data for an individual truck within a manager's own fleet may be available, improved insights may be found using statistical data related to other trucks that are similar to the individual truck. For example, a fleet manager for a 2019 Freightliner class 8 truck may know how many miles have been driven, when preventative maintenance has been performed, and its typical fuel efficiency (e.g., miles per gallon) over the life of the truck, etc., but maintenance and fleet management decisions may be improved by considering data from other similar trucks.

It is with respect to these and other general considerations that embodiments have been described. Also, although relatively specific problems have been discussed, it should be understood that the embodiments should not be limited to solving the specific problems identified in the background.

### SUMMARY

Aspects of the present disclosure are directed to providing fleet analytics and identifying a remediation action for fleet management.

In one aspect, a method for fleet management is provided. Fleet management data for a target fleet of vehicles is received. A target vehicle vector that represents a target vehicle of the target fleet is generated based on the fleet management data. One or more similar vehicles are identified, from a plurality of reference vehicles, that are similar to the target vehicle using a distance metric between the target vehicle vector and a plurality of reference vehicle vectors. The plurality of reference vehicle vectors representing the plurality of reference vehicles. Vehicle characteristics of the target vehicle and the one or more similar vehicles are identified, where the vehicle characteristics affect vehicle efficiency of the target vehicle. The vehicle characteristics affecting vehicle efficiency of the target vehicle and corresponding vehicle characteristics of the one or more similar vehicles are displayed.

In an embodiment, the receiving of the fleet management data involves receiving a maintenance history for the target fleet of vehicles.

In an embodiment he method involves determining a remediation action for management of at least one of the target vehicles based on the vehicle characteristics affecting vehicle efficiency of the target vehicle.

The method may involve generating a target fleet vector that represents the target fleet based on the fleet management data. It may also involve generating a simulated fleet vector based on the target fleet vector and a plurality of reference fleet vectors using the distance metric, the plurality of reference fleet vectors representing a plurality of reference fleets of vehicles, wherein the simulated fleet vector represents a simulated fleet of vehicles. Any of the methods may involve determining the remediation action for management of the target fleet based on the simulated fleet vector, where generating the target fleet vector involves generating, for each vehicle in the target fleet, a respective target vehicle vector that represents the vehicle.

The process of generating the simulated fleet vector may involve, for each vehicle in the target fleet, generating a simulated vehicle vector based on a corresponding target vehicle vector and the plurality of reference vehicle vectors using the distance metric.

In an embodiment the distance metric is a Manhattan distance metric.

In an embodiment, the process of identifying the one or more similar vehicles may involve sorting the plurality of reference vehicles and the target fleet of vehicles into a plurality of groups using a similarity algorithm; and calculating the distance metric between vehicles within a group of the plurality of groups.

In an embodiment, the fleet management data may represent a workload of the target fleet of vehicles; and the simulated fleet of vehicles may be generated to perform the workload of the target fleet of vehicles.

In an embodiment the simulated fleet of vehicles includes at least one target vehicle from the target fleet of vehicles having a modification indicated by the remediation action.

In an embodiment, the simulated fleet of vehicles has a different number of vehicles than the target fleet of vehicles; and a vehicle addition to or a vehicle removal from the target fleet of vehicles is indicated by the remediation action.

In another aspect, a system for fleet management is provided. The system comprises a processor and a non-transitory computer-readable memory having computer-readable instructions that, when executed by a processor, cause the processor to: receive fleet management data for a target fleet of vehicles; generate a target vehicle vector that represents a target vehicle of the target fleet based on the fleet management data; identify one or more similar vehicles, from a plurality of reference vehicles, that are similar to the target vehicle using a distance metric between the target vehicle vector and a plurality of reference vehicle vectors, the plurality of reference vehicle vectors representing the plurality of reference vehicles; identifying vehicle characteristics of the target vehicle and the one or more similar vehicles, the vehicle characteristics affecting vehicle efficiency of the target vehicle; and displaying the vehicle characteristics affecting vehicle efficiency of the target vehicle and corresponding vehicle characteristics of the one or more similar vehicles.

In some embodiments, the computer-readable instructions further cause the processor to receive a maintenance history for the target fleet of vehicles.

In some embodiment, the computer-readable instructions further cause the processor to determine a remediation action for management of the target vehicle based on the vehicle characteristics affecting vehicle efficiency of the target vehicle.

It is contemplated that the computer-readable instructions may cause the processor to generate a target fleet vector that represents the target fleet based on the fleet management data; generate a simulated fleet vector based on the target fleet vector and a plurality of reference fleet vectors using the distance metric, the plurality of reference fleet vectors representing a plurality of reference fleets of vehicles, wherein the simulated fleet vector represents a simulated fleet of vehicles; and determine the remediation action for management of the target fleet based on the simulated fleet vector; where generating the target fleet vector comprises generating, for each vehicle in the target fleet, a respective target vehicle vector that represents the vehicle.

In some embodiments the computer-readable instructions further cause the processor to, for each vehicle in the target fleet, generate a simulated vehicle vector based on a corresponding target vehicle vector and the plurality of reference vehicle vectors from the plurality of reference fleet vectors using the distance metric.

In some embodiments the distance metric is a Manhattan distance metric.

It is contemplated that in some embodiments, the computer-readable instructions further cause the processor to sort the plurality of reference vehicles and the target fleet of vehicles into a plurality of groups using a similarity algorithm; and calculate the distance metric between vehicles within a group of the plurality of groups.

It is contemplated that in some embodiments the fleet management data represents a workload of the target fleet of vehicles; and the simulated fleet of vehicles is generated to perform the workload of the target fleet of vehicles.

In certain embodiments the simulated fleet of vehicles includes at least one target vehicle from the target fleet of vehicles having a modification indicated by the remediation action.

In some embodiments the simulated fleet of vehicles has a different number of vehicles than the target fleet of vehicles; and a vehicle addition to or a vehicle removal from the target fleet of vehicles is indicated by the remediation action.

This summary is provided to introduce a selection of concepts in a simplified form that are further described below in the Detailed Description. This summary is not intended to identify key features or essential features of the claimed subject matter, nor is it intended to be used to limit the scope of the claimed subject matter.

### BRIEF DESCRIPTION OF THE DRAWINGS/FIGURES

Non-limiting and non-exhaustive examples are described with reference to the following Figures.
Fig. 1 shows a block diagram of an example of a system for fleet management remediation, according to an example embodiment.
Fig. 2 shows a block diagram of an example vectorization for individual trucks, according to an example embodiment.
Fig. 3 shows a diagram of reference vehicles that are identified based on a target vehicle, according to an example embodiment.
Fig. 4 shows a diagram of simulated fleets that are identified using the sets of reference trucks identified by the fleet comparison engine of Fig. 1, according to an example embodiment.
Fig. 5 shows a diagram of a user interface for comparison of a target fleet to a plurality of simulated fleets, according to an example embodiment.
Fig. 6 shows a diagram of a user interface for comparison of a target fleet to a plurality of simulated fleets, according to an example embodiment.
Fig. 7 shows a diagram of a user interface for comparison of a target vehicle to a plurality of reference vehicles, according to an example embodiment.
Fig. 8 shows a flowchart of an example method of identifying a remediation action for fleet management, according to an example embodiment.
Fig. 9 is a block diagram illustrating example physical components of a computing device with which aspects of the disclosure may be practiced.

### DETAILED DESCRIPTION

In the following detailed description, references are made to the accompanying drawings that form a part hereof, and in which are shown by way of illustrations specific embodiments or examples. These aspects may be combined, other aspects may be utilized, and structural changes may be made without departing from the present disclosure. Embodiments may be practiced as methods, systems, or devices. Accordingly, embodiments may take the form of a hardware implementation, an entirely software implementation, or an implementation combining software and hardware aspects. The following detailed description is therefore not to be taken in a limiting sense, and the scope of the present disclosure is defined by the appended claims and their equivalents.

As described in the Background, maintenance and fleet management decisions may be improved by considering data from similar trucks. However, identifying similar trucks may be challenging since each truck has a wide range of features, options, and usage criteria. For example, even a single truck may have drastically different fuel efficiency depending on whether it operates primarily in a city (e.g., subject to frequent stopping) with many steep hills where it might have low fuel efficiency, as opposed to a long haul route over flat terrain, where it might have relatively higher fuel efficiency. Accounting for different usage criteria and other features may be difficult, for example, depending on whether a statistically significant number of trucks is available for analysis. However, trucks with sufficiently similar, even though inexact, criteria and features may be identified for useful analysis and thereby, a remediation action that improves operation of the fleet may be identified.

In various aspects, a fleet comparison engine is configured to receive fleet management data for a target fleet of vehicles. The target fleet of vehicles may be a fleet of trucks for a logistics company, distribution company, manufacturer, or other suitable fleet. For faster and more efficient comparisons with other reference fleets of vehicles, the fleet comparison engine generates a target vehicle vector that represents a target vehicle of the target fleet based on the fleet management data. In some examples, the target vehicle vector is a vector of numbers (e.g., integer values and/or floating point values). The fleet comparison engine may then identify one or more similar vehicles, from a plurality of reference vehicles, that are similar to the target vehicle using a distance metric between the target vehicle vector and a plurality of reference vehicle vectors. The plurality of reference vehicle vectors represent the plurality of reference vehicles. The fleet comparison engine identifies vehicle characteristics of the target vehicle and the one or more similar vehicles, where the vehicle characteristics affecting vehicle efficiency of the target vehicle, and displays the vehicle characteristics affecting vehicle efficiency of the target vehicle and corresponding vehicle characteristics of the one or more similar vehicles. For example, the vehicle characteristics of the target vehicle include any physical and/or operational properties of the target vehicle that can be measured and classified. For example, the vehicle characteristics may include class, brand, model, year, height, width, length, weight, number of axles, payload capacity, tire load rating, tire pressure, odometer reading, fuel efficiency average (MPG), fuel efficiency components (e.g., wind deflectors), mean time between failure (MTBF), center of gravity, vehicle motion response time, and/or operational systems of the target vehicle.

In some examples, the fleet comparison engine generates a target fleet vector that represents the target fleet based on the fleet management data and also generates a simulated fleet vector based on the target fleet vector and a plurality of reference fleet vectors using the distance metric. The plurality of reference fleet vectors represents the plurality of reference fleets of vehicles and the simulated fleet vector represents a simulated fleet of vehicles. The reference fleet vectors may represent a plurality of reference fleets of vehicles that are different from the target fleet of vehicles, while the simulated fleet vector represents a simulated fleet of vehicles. The simulated fleet of vehicles may be considered a "fantasy" fleet of vehicles in that at least some individual vehicles, and in some cases all vehicles within the simulated fleet, may not be operated by the fleet manager of the target fleet of vehicles. Nevertheless, expanding a pool of data from which analysis may be performed and processing the pool of data for efficient comparisons allows for improved analysis. Accordingly, the fleet comparison engine may provide comparative data for an understanding of the fleet operations and/or determine a remediation action for management of the target fleet of vehicles based on the simulated fleet vector. For example, the simulated fleet vector may provide an indication that one or more particular trucks within the target fleet are responsible for a larger than expected share of poor efficiency (e.g., poor miles per gallon) and may benefit from maintenance, replacement, driver training, etc.

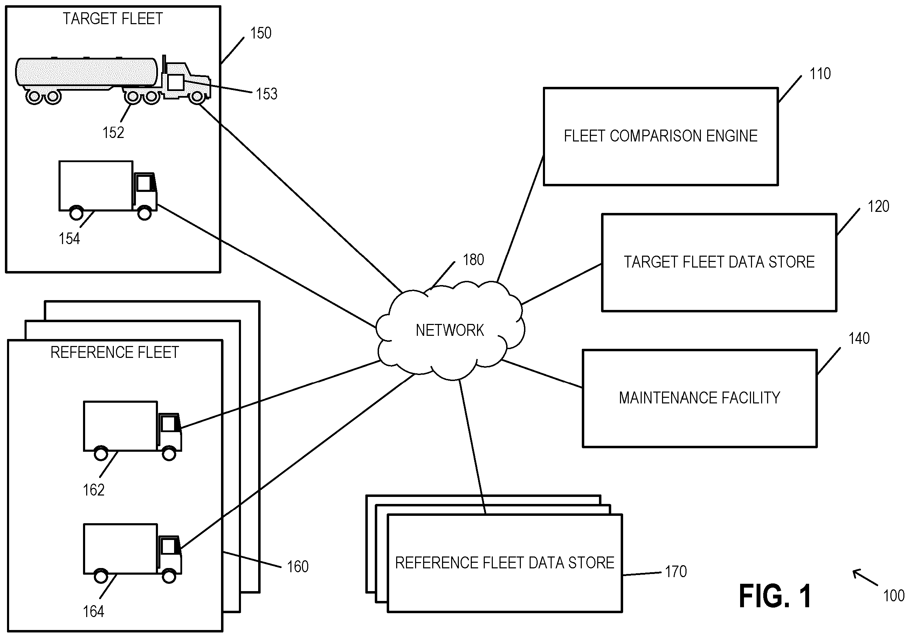

This and many further embodiments for a computing device are described herein. For instance, Fig. 1 shows a block diagram of an example of a system 100 for fleet management comparison and remediation, according to an example embodiment. The system 100 includes a fleet comparison engine 110 configured to display vehicle characteristics affecting vehicle efficiency and determine remediation actions for management of a target fleet, such as a target fleet 150, based on vehicle data from different vehicles. The target fleet 150 includes a plurality of vehicles, shown as truck 152 and truck 154. Although only two trucks are shown, the target fleet 150 may have ten, fifty, several hundred, or any suitable number of trucks. In some examples, all trucks of the target fleet 150 are of a same type, such as local delivery medium duty trucks, long haul trucks, or other suitable type. In other examples, the target fleet 150 has trucks of two, three, or more different types. For ease of description, examples related to truck 152 will be described, but these examples may be applicable to other vehicles, such as truck 154, truck 162, truck 164, or other vehicles. Although only a single target fleet is shown, a company or organization may operate vehicles in two, three, or more target fleets. Moreover, although the example shown in Fig. 1 uses trucks as vehicles within the target fleet 150, the target fleet 150 may include other vehicles such as vans, cars, boats, airplanes, helicopters, etc., in other examples. In one example, a first target fleet for a corporation has vans, a second target fleet for the corporation has trucks, and a third target fleet for the corporation has airplanes.

The truck 152 may communicate with a target fleet data store 120, for example, to provide vehicle data for storage, analysis, and fleet management. The vehicle data for the truck 152 may include a truck class, truck brand, truck model, model year, diagnostic data, odometer readings, fuel consumption, fuel efficiency average (MPG), mean time between failure (MTBF), vehicle telematics data, location data (e.g., GPS coordinates), driver management (e.g., alertness and driving characteristics), or other suitable data for fleet management applicable to the particular vehicle. In other words, the vehicle data for the truck 152 includes physical and/or operational properties associated with the truck 152. In some examples, the vehicle data is captured by one or more sensors and processors (not shown) within the truck 152 that are used in normal operation of the truck 152, such as fuel sensors, engine sensors (e.g., fuel pressure, oil temperature, RPM, etc.), engine controllers, GPS receivers, dashboard or informatic/infotainment display controllers, etc. In other examples, the truck 152 includes standalone processors or devices (e.g., GPS receivers) that capture some of the vehicle data. The truck 152 may include a communication device 153 or other suitable telematics device that may include a mobile network interface (e.g., 3G/4G/5G transceiver), satellite interface, Wi-Fi interface, Bluetooth interface, data port, or other suitable device for transmission of the vehicle data. The communication device 153 may obtain the vehicle data from the sensors and/or processors (e.g., via a CAN bus, OBD-III port, or other suitable port). Transmission of the vehicle data may utilize a network 180, which may comprise one or more networks such as local area networks (LANs), wide area networks (WANs), enterprise networks, the Internet, etc., and may include one or more of wired, wireless, and/or optical portions. In some examples, the communication device 153 may communicate with a smartphone, tablet, laptop, etc. as an intermediary to the network 180 or to the target fleet data store 120.

The target fleet data store 120 may be a computing device, network server, cloud storage service, database, or other suitable data store. Generally, the target fleet data store 120 stores fleet information for the target fleet 150. In some examples, the target fleet data store 120 also processes the fleet information and provides a user interface for software with fleet management features (e.g., route planning, maintenance planning, fleet status). Fleet information may include the vehicle data preferably from each of the vehicles within the target fleet 150, along with additional data related to fleet management (e.g., ownership information, business contracts for the fleet, maintenance contracts, trailer information, cargo details (including weight and capacity utilization), driver profiles, spare parts inventory information, route planning information, etc.). Fleet information may also include location data received from a GPS service, fuel consumption data received from fuel stations, tractor trailer information received from weigh stations, weather conditions, road conditions, etc.

The system 100 may also include one or more maintenance facilities, such as maintenance facility 140. The maintenance facility 140 may be a truck service station, fuel station, repair station, or other suitable facility for maintenance of the truck 152. In some examples, the maintenance facility 140 includes diagnostic equipment (not shown) that receives vehicle data about the truck 152. In one example, the diagnostic equipment is a computing device or tablet with a user interface for entering data. For example, a technician that performs an oil change on the truck 152 may enter information into the user interface about the oil change, such as the current mileage, oil viscosity for new oil, oil analysis for used oil, etc. In another example, the diagnostic equipment is an engine diagnostic device that communicates with the truck 152, for example, via an OBD-III port, 9-pin Type 2 port, controller area network (CAN) bus port, or other suitable interface.

As described above, the fleet comparison engine 110 is configured to determine a remediation action for management of the target fleet 150. To do so, the fleet comparison engine 110 utilizes vehicle data from the target fleet 150 along with vehicle data from a plurality of reference fleets 160. Each reference fleet 160 may correspond to a reference fleet data store 170, generally corresponding to the target fleet 150 and the target fleet data store 120, respectively. For ease of description, a single instance of the reference fleet 160 and the reference fleet data store 170 are described in various examples, but additional instances (e.g., 50, 100, 300 or more instances) may be used in other examples. The reference fleet 160 may include additional trucks (not shown) with different levels of similarity to the trucks of the target fleet 150.

The reference fleet 160 includes trucks 162 and 164, which may be similar to the trucks 152 and 154 of the target fleet 150. In other words, the trucks 162 and 164 may each have a suitable communication device (not shown) for providing vehicle data to the reference fleet data store 170. Moreover, the trucks 162 and 164 may visit the maintenance facility 140 for maintenance. Vehicle data for the trucks 162 and 164 may be provided to the fleet comparison engine 110 via the reference fleet data store 170, directly from the trucks 162 and 164, or any suitable combination.

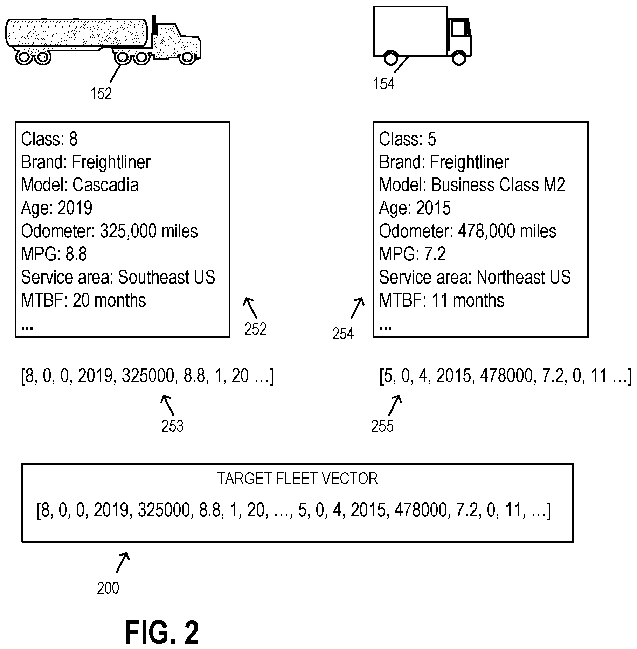

Fig. 2 shows a block diagram of an example vectorization for individual trucks, according to an example embodiment. As described above, the fleet comparison engine 110 is configured to identify vehicle characteristics of the target vehicle affecting vehicle efficiency of the target vehicle and may also determine remediation actions for management of the target fleet 150 based on vehicle data from different vehicles. The different vehicles may include the vehicles within the target fleet 150 and also the vehicles within the reference fleets 160. In some scenarios, the fleet comparison engine 110 may have access to vehicle data for thousands or even tens of thousands of vehicles from many different fleets. To improve processing speed and efficiency for determining a suitable remediation action, the fleet comparison engine 110 generates a target fleet vector 200 that represents the target fleet 150 and similar reference fleet vectors (not shown) for the reference fleets 160.

The target fleet vector 200 is based upon vehicle data 252 for the truck 152, vehicle data 254 for the truck 154, etc. In some examples, the fleet comparison engine 110 generates a target vehicle vector for each of the trucks, such as the target vehicle vector 253 for the truck 152 and the target vehicle vector 255 for the truck 154. In the example shown in Fig. 2, the vehicle data 252 includes a truck class, truck brand, truck model, model year, odometer reading, fuel efficiency average (MPG), service area, and mean time between failure (MTBF). Additional criteria may be included in the vehicle data 252, or omitted from the vehicle data 252, in other examples. Similar information for the truck 154 is shown as vehicle data 254. In the illustrative example, the target fleet vector 200 is generated by concatenating the target vehicle vectors (e.g., 253, 355) of the target fleet 150.

In the example shown in Fig. 2, the target vehicle vector 253 is based on values of the vehicle data 252, with some values being copied as an integer (e.g., class and age), or other values being converted from text into an integer index (e.g., converting Freightliner to 0, Volvo to 1, etc.). Although only integers are shown in the example of Fig. 2, in other examples, floating point values may be used in addition to, or instead of, integer values. In some examples, one or more values from the vehicle data 252 may be processed to obtain a single value for the target vehicle vector 253. For example, the fleet comparison engine 110 may perform a hash function on the class, odometer, and service area to obtain a hybrid value for the target vehicle vector 253. Hybrid values may be generated and inserted into the target vehicle vector 253 in place of, or in addition to, the values upon which the hybrid value is based. In some examples, two, three, or more hybrid values are used to provide improved matchmaking among vehicles. In still other examples, some values may be weighted to have a higher impact on identified remediation actions.

Hybrid values may also represent parameters that are based on other values of the vehicle data. For example, utilization of a particular truck may not be available as a value directly from the vehicle data, but may be determined based on location maps of where a truck is located, for example. In one example, utilization is a percentage of time that the truck is performing useful work, such as loading, unloading, or driving, as opposed to idling at a rest stop, undergoing maintenance, or stopped. Utilization may be determined based on geolocation data to map locations where the truck has been. In one example, the truck may be considered utilized when a Manhattan distance or Euclidean distance of its GPS locations is greater than 2 miles, 5 miles, or another suitable threshold. In another example, the truck may be considered utilized when located outside of a predetermined geofenced area.

In some examples, the fleet comparison engine 110 is configured to group vehicles based on certain characteristics of interest or using a similarity algorithm. For example, the fleet comparison engine 110 may perform locality sensitive hashing or another suitable similarity algorithm to sort vehicles into a plurality of groups. Generally, the similarity algorithm is configured to identify groups, nearest neighbors, or subsets of vehicles from the target fleet 150 and/or the reference fleets 160 where members of a group are similar in one or more criteria or features. For example, a first group may include trucks having a load capacity between 20,000 pounds and 30,000 pounds and a second group may include trucks having a load capacity between 30,000 pounds and 60,000 pounds. Other suitable similarity algorithms include a MinHash algorithm, tree-based methods such as regression and classification trees, etc. In the case of locality sensitive hashing (LSH) as the similarity algorithm, LSH may be used to indicate that similar vehicles belong in a same hash group or "bucket", while dissimilar vehicles belong in different groups. In various examples, different hashes may be used to indicate groups of vehicles that are separated by type, class, region, or combinations thereof (e.g., class 8 sleeper trucks located in the Midwest). Advantageously, the fleet comparison engine 110 may perform an approximate nearest neighbor search using the only vehicles within a hash group, which may reduce processing complexity from O(n²) to O(n) in some examples. For example, the fleet comparison engine 110 may calculate the distance metric between vehicles within a group, instead of between all available reference vehicles.

In some examples, the target fleet vector includes aggregate information based on the vehicle data (e.g., by aggregating or concatenating target vehicle vectors of a target fleet). For example, a target fleet vector may indicate a number of vehicles within a Midwest region, a number of vehicles in a southeast region, a number of long haul vehicles, a number of Class 8 vehicles, etc.

In addition to generating the target fleet vector, the fleet comparison engine 110 generates reference fleet vectors corresponding to at least some of the reference fleets 160. The reference fleet vectors are generated in a similar manner to the target fleet vector, but are based on vehicle data for the reference fleets. The fleet comparison engine 110 may then compare the target fleet of vehicles to the reference fleet of vehicles using the vectors (i.e., target fleet vectors and reference fleet vectors), instead of comparing individual trucks. Advantageously, the target fleet vectors and reference fleet vectors may contain hybrid values that emphasize desired features, such as fuel efficiency, over less desired features (e.g., truck brand). In one example, a fleet manager of a target fleet with a particular fleet composition (e.g., 60% Class 8 trucks, 40% Class 7 trucks) may compare the target fleet to other similar reference fleets having a same or similar composition within a same industry.

Comparisons of the target fleet and reference fleet may then be performed using each of the values within the vectors, or only a subset of the values, in various examples. In some scenarios, a comparison based on one or two hybrid values is processed more quickly than a comparison based on all of the values of the vectors. In other scenarios, more similar reference fleets may be identified using comparisons of additional values of the vectors.

Although the target fleet vector 200 is shown as a one dimensional vector or array, the target fleet vector 200 may be implemented as a multi-dimensional vector, multi-dimensional matrix, or other suitable data structure, in other examples. Moreover, the target fleet vector 200 may be maintained as separate vectors in some examples, such as separate vectors for each vehicle within a target fleet, or separate vectors for each class of vehicle, each region, etc.

The fleet comparison engine 110 allows a fleet manager to gauge relative performance of similar trucks, identify outliers, and identify potential causes for outliers having poor performance. Using the target fleet vectors and reference fleet vectors along with one or more distance metrics, the fleet comparison engine 110 efficiently identifies which reference fleets are pertinent for comparison, and even which trucks are pertinent for comparison. In some examples, the distance metric is a cosine similarity metric performed using the values of the target fleet vector and the values of each of the reference fleet vectors to obtain a similarity score for the target fleet vector against the corresponding reference fleet vector. In this way, a similarity value of the target fleet relative to the reference fleet may be obtained and reference fleets with similarity values that exceed a threshold (e.g., greater than 0.9), or reference fleets within a "top 5" of similarity for example, may be selected for further analysis.

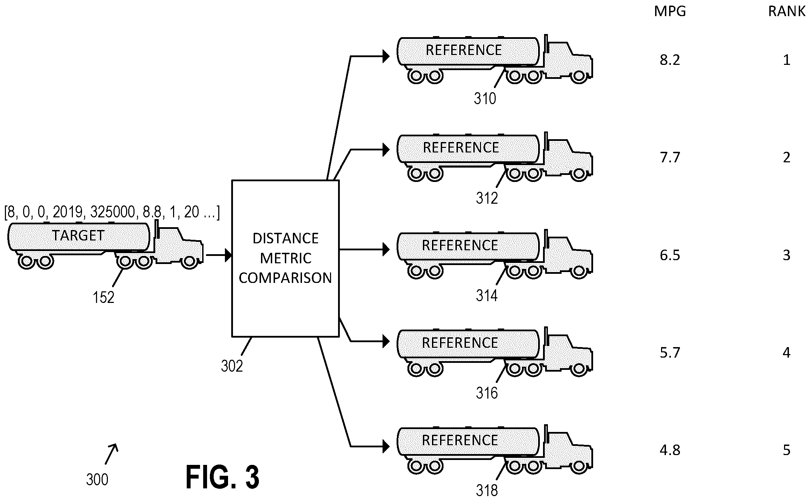

Fig. 3 shows a diagram of reference vehicles that are identified based on a target vehicle, such as the truck 152. As described above, the fleet comparison engine 110 may be configured to identify a simulated fleet of vehicles based on a target fleet and reference fleets. In the example shown in Fig. 3, to assemble a simulated fleet, the fleet comparison engine 110 uses a suitable distance metric (described above) to compare a target vehicle vector for the truck 152 to reference vehicle vectors for other trucks within the reference fleet data stores 170. The fleet comparison engine 110 may generate a similarity score for each pairing of trucks (i.e., one truck from the reference fleets paired with the truck 152) and select a set of trucks for forming simulated fleets, as described below. In the example shown in Fig. 3, the set of trucks includes five reference trucks (shown as trucks 310, 312, 314, 316, 318) with highest similarity scores for the target truck 152. The set of trucks may then be ranked according to one or more suitable criteria. In the example shown in Fig. 3, the trucks 310, 312, 314, 316, 318 are ranked according to their fuel efficiency (MPG). In other examples, the trucks may be ranked according to their utilization, mean time between failure, carbon emissions, cost of ownership, fleet availability, or other suitable parameters. The fleet comparison engine 110 may continue with the above-described process to identify different sets of reference trucks for each truck within the target fleet. Accordingly, for a target fleet having five trucks, the fleet comparison engine 110 may generate five sets of five reference trucks.

As described above, the reference fleet data stores 170 may contain vehicle data for trucks that are outside of the target fleet and may even be from competitor fleets. In some examples, portions of the vectors may be anonymized to prevent private or proprietary information from being disclosed to the fleet manager of the target fleet.

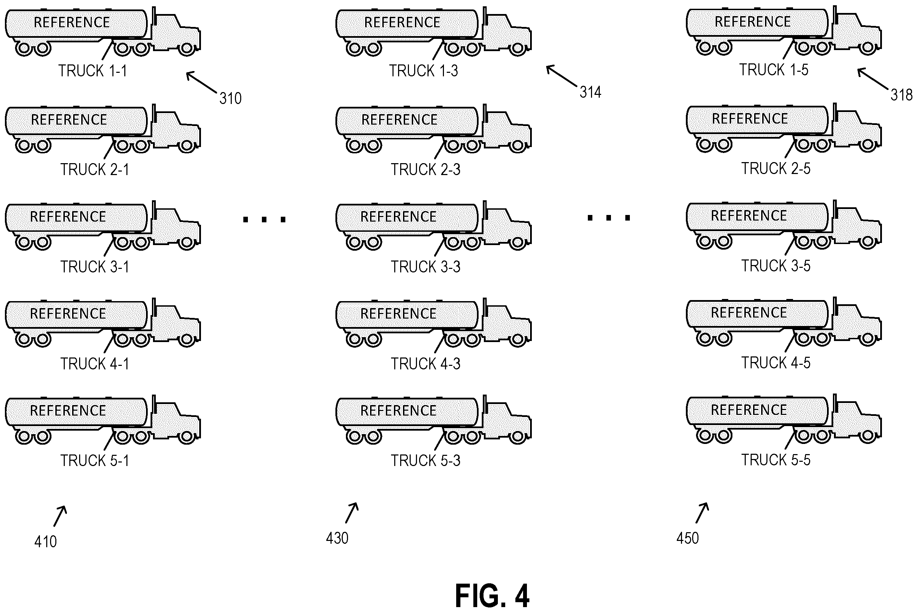

Fig. 4 shows a diagram of simulated fleets that are identified using the sets of reference trucks identified by the fleet comparison engine 110. The simulated fleet of vehicles may be considered a "fantasy" fleet of vehicles in that at least some individual vehicles may not be operated by the fleet manager of the target fleet of vehicles. Using the example from Fig. 3, five simulated fleets are identified with each simulated fleet having five trucks. Each of the trucks is identified with a fleet number and truck number, so a first simulated fleet 410 includes trucks 1-1, 2-1, 3-1, 4-1, and 5-1, a third simulated fleet 430 includes trucks 1-3, 2-3, 3-3, 4-3, and 5-3, and a fifth simulated fleet 450 includes trucks 1-5, 2-5, 3-5, 4-5, and 5-5. The second and fourth simulated fleets are not shown for clarity. Each of the simulated fleets includes one truck that corresponds to one truck of the target fleet with the trucks arranged among the simulated fleets such that all same ranked similar vehicles are grouped into a same simulated fleet. In other words, the simulated fleet 410 is a "best" simulated fleet, containing the reference truck 310 and similarly ranked (i.e., 1^{st}) reference trucks from other sets of reference trucks. The simulated fleet 450 is a "worst" simulated fleet, containing the reference truck 318 and similarly ranked (i.e., 5^{th}) reference trucks from other sets of reference trucks.

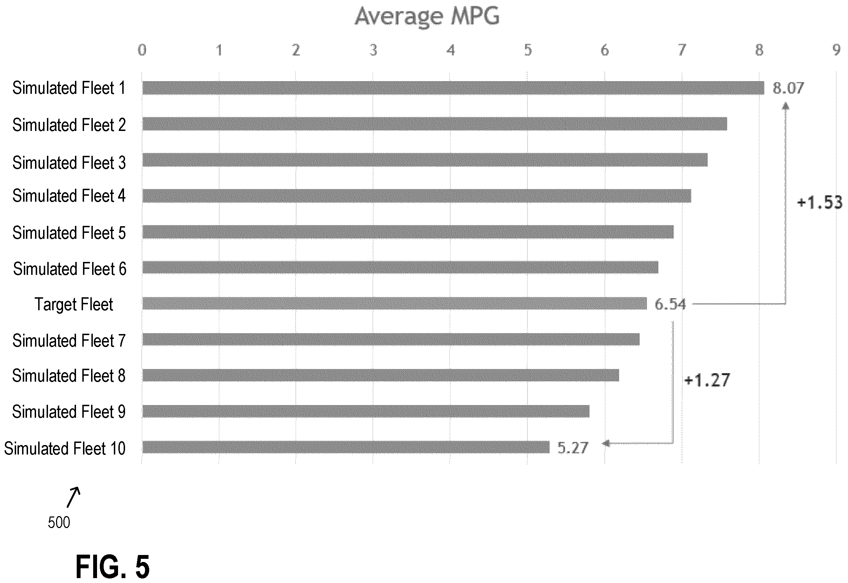

Figs. 5, 6, 7, 8, and 9 show example user interfaces that may be generated by the fleet comparison engine 110, or suitable data for the user interface 500 may be provided for rendering by a client computing device.

Fig. 5 shows a diagram of a user interface 500 for comparison of a target fleet to a plurality of simulated fleets. In Fig. 5, an average fuel efficiency for an entire fleet of trucks is compared among a target fleet and ten simulated fleets (e.g., similar to simulated fleets 410, 430, 450). Accordingly, the fleet comparison engine 110 identifies a relative efficiency of the target fleet for a fleet manager, which may be used to identify remediation actions for the target fleet.

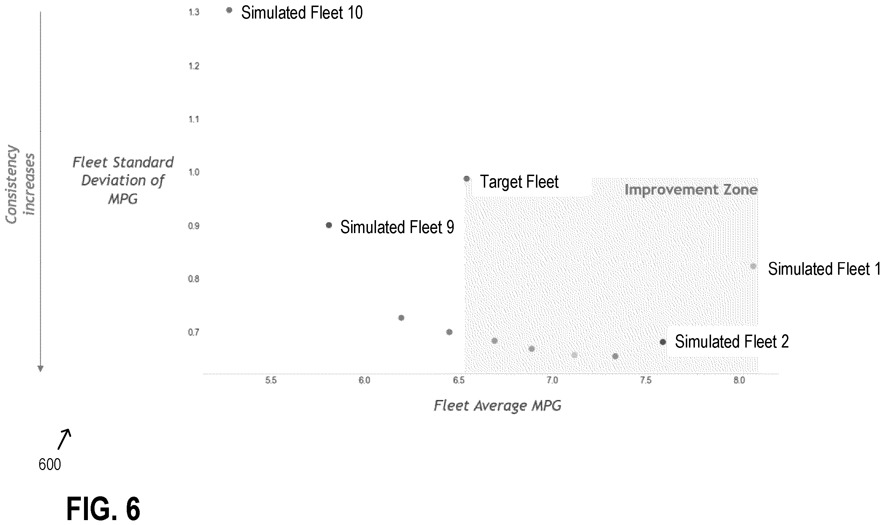

Fig. 6 shows a diagram of a user interface 600 for comparison of a target fleet to a plurality of simulated fleets. In Fig. 6, a standard deviation of fuel efficiency (MPG) is plotted against a fleet average fuel efficiency, showing that improvements in operation of the target fleet may be possible by increasing consistency of fuel consumption (e.g., providing improved budgeting ability) and increasing average fuel efficiency (reducing operational expenses).

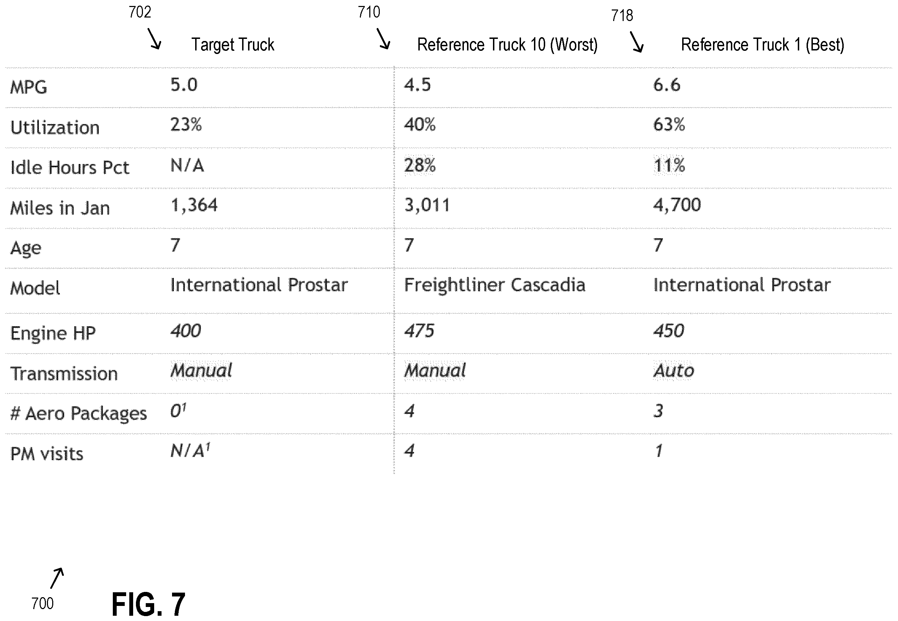

Fig. 7 shows a diagram of a user interface 700 for comparison of a target vehicle (Target Truck 702) to a plurality of reference vehicles (Reference Truck 1, Reference Truck 10). In Fig. 7, the user interface 700 provides a visual comparison of the target vehicle from a target fleet along with similar reference trucks from simulated fleets. In this example, the reference truck 10 (column 710) corresponds to a worst performing truck (by fuel efficiency) among similar trucks to the target truck 702, while the reference truck 1 (column 718) corresponds to a best performing truck (by fuel efficiency) among the similar trucks. As shown in Fig. 7, the fleet comparison engine 110 may highlight values from the corresponding vectors that are further from the target truck 702 according to a suitable distance metric, as described above. In the example shown in Fig. 7, the fleet comparison engine 110 highlights the idle hours percentage (Idle Hours Pct), which shows that the worst performing truck (710) is idle 28% of the time, while the best performing truck (718) is idle just 11% of the time. In this example, the fleet comparison engine 110 may determine a remediation action for management of the target fleet that contains the target truck 702, where the remediation action may include driver training to reduce idling, rerouting of a delivery path to avoid an inefficient truck stop, addition of an auxiliary power unit (APU) to provide trailer refrigeration without running of the motor of the truck, or other suitable remediation actions. The fleet comparison engine 110 may also highlight the different transmission types and determine the remediation action to include a change in transmission from a manual transmission to an automatic transmission, changing to a truck with an automatic transmission, etc.

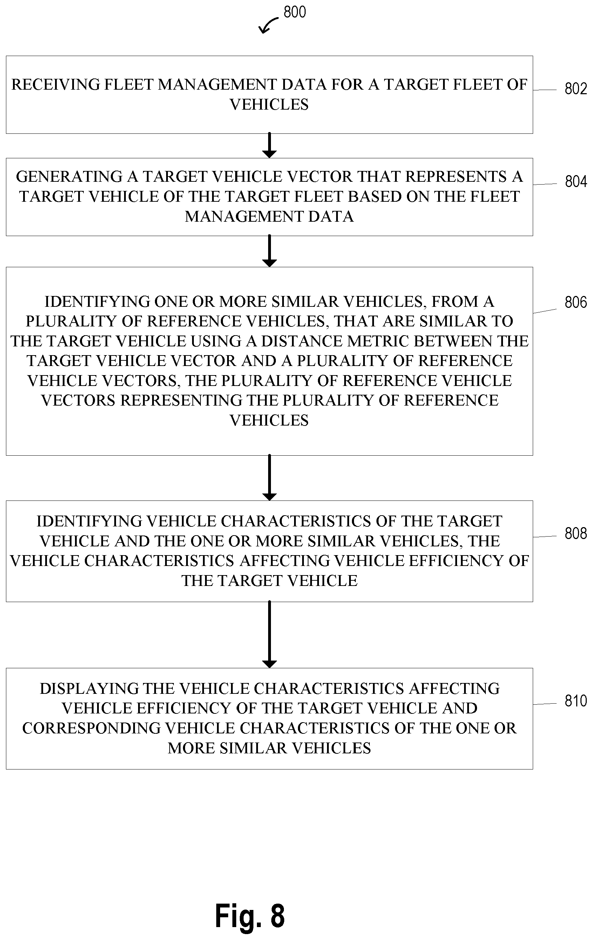

Fig. 8 shows a flowchart of an example method 800 of identifying a remediation action for fleet management, according to an example embodiment. Technical processes shown in these figures will be performed automatically unless otherwise indicated. In any given embodiment, some steps of a process may be repeated, perhaps with different parameters or data to operate on. Steps in an embodiment may also be performed in a different order than the top-to-bottom order that is laid out in Fig. 8. Steps may be performed serially, in a partially overlapping manner, or fully in parallel. Thus, the order in which steps of method 800 are performed may vary from one performance to the process of another performance of the process. Steps may also be omitted, combined, renamed, regrouped, be performed on one or more machines, or otherwise depart from the illustrated flow, provided that the process performed is operable and conforms to at least one claim. The steps of Fig. 8 may be performed by the fleet comparison engine 110, or other suitable computing device.

Method 800 begins with step 802. At step 802, fleet management data (e.g., vehicle data, fleet information) for a target fleet of vehicles is received. For example, the fleet comparison engine 110 may receive vehicle data from the target fleet 150 (e.g., trucks 152 or 154), fleet information from the target fleet data store 120, fleet information from the reference fleet data store 170, and/or vehicle data from the reference fleets 160. In some examples, step 802 includes receiving a maintenance history for the target fleet of vehicles, for example, from the maintenance facility 140. In some examples, the fleet management data represents a workload of the target fleet of vehicles and the simulated fleet of vehicles is generated to perform the workload of the target fleet of vehicles.

At step 804, a target vehicle vector that represents a target vehicle of the target fleet is generated based on the fleet management data.

At step 806, one or more similar vehicles are identified, from a plurality of reference vehicles, where the one or more vehicles are similar to the target vehicle using a distance metric between the target vehicle vector and a plurality of reference vehicle vectors. The plurality of reference vehicle vectors represent the plurality of reference vehicles. In some examples, the distance metric is a Euclidean distance metric, Manhattan distance metric, or Jaccard similarity. For example, the plurality of reference vehicles and the target fleet of vehicles are sorted into a plurality of groups using the locality-sensitive hashing process (or other suitable similarity algorithm, as described above). A suitable distance metric is then used to calculate a distance between vehicles within a particular group of the plurality of groups. Since the distance metric is calculated only within the group, instead of across all of the reference vehicles and the target fleet, processing time and resources are reduced.

At step 808, vehicle characteristics of the target vehicle and the one or more similar vehicles are identified. More specifically, the vehicle characteristics of the target vehicle that affect the vehicle efficiency of the target vehicle are identified. As described above, the vehicle characteristics include physical and/or operational characteristics associated with the target vehicle. For example, once the one or more similar vehicles are identified, the vehicle characteristics of the target vehicle and the one or more similar vehicles are compared based upon the fleet management data to gauge relative performance. Based on the comparison, one or more vehicle characteristics are identified as affecting the vehicle efficiency of the target vehicle. For example, changes to certain of the physical or operational characteristics which can help improve or change the vehicle efficiency of the target vehicle.

It should be appreciated that, in some embodiments, a user may provide or select one or more vehicle characteristics of the target vehicle to compare against the one or more similar vehicles to gauge relative performance. For example, if the user specifically wants to know the fuel efficiency of the target truck by comparing the fuel consumption rate of the target vehicle and the one or more similar vehicles.

At step 810, the vehicle characteristics affecting vehicle efficiency of the target vehicle and corresponding vehicle characteristics of the one or more similar vehicles are displayed.

In some examples, the method 800 further comprises determining a remediation action for management of the target vehicle based on the vehicle characteristics affecting vehicle efficiency of the target vehicle. Different remediation actions may be determined by the fleet comparison engine 110. Examples of remediation actions include notifications about poor or delayed preventative maintenance routines to reduce mean time between failure and/or mean time to recovery, recommendations for aerodynamic packages (e.g., body kits) to improve fuel efficiency, installation of auxiliary power units to reduce idling time, changing a driver route to avoid extended stops at an inefficient truck stop, recommending driver training to reduce idle time, recommending a further analysis of a vehicle for replacement consideration, recommendation to switch to a vehicle with an automatic transmission to improve fuel efficiency, recommendation to switch to a vehicle with a different engine to improve fuel efficiency, recommendation to adjust tire pressure to improve tire wear, etc.

The method 800 may further comprise: generating a target fleet vector that represents the target fleet based on the fleet management data; generating a simulated fleet vector based on the target fleet vector and a plurality of reference fleet vectors using the distance metric; and determining the remediation action for management of the target fleet based on the simulated fleet vector. The plurality of reference fleet vectors represent a plurality of reference fleets of vehicles and the simulated fleet vector represents a simulated fleet of vehicles. Generating the target fleet vector may comprise generating, for each vehicle in the target fleet, a respective target vehicle vector that represents the vehicle.

The target fleet vector may correspond to the target fleet vector 200. Accordingly, the target fleet vector may include one or more target vehicle vectors 253, 255, etc. In some examples, the target fleet vector includes additional fleet information, for example, related to route planning, maintenance planning, fleet status, etc. Moreover, the simulated fleet vector may generally correspond to the target fleet vector, but use vehicle data from similar vehicles as described above with respect to Figs. 3-5. For example, the simulated fleet vector may correspond to the simulated fleet 410, the simulated fleet 430, or another suitable simulated fleet.

In some examples, the fleet management data represents a workload of the target fleet of vehicles the simulated fleet of vehicles is generated to perform the workload of the target fleet of vehicles. The simulated fleet of vehicles may also include at least one target vehicle from the target fleet of vehicles having a modification indicated by the remediation action. In some examples, the simulated fleet of vehicles has a different number of vehicles than the target fleet of vehicles and a vehicle addition to or a vehicle removal from the target fleet of vehicles is indicated by the remediation action.

In some examples, generating the simulated fleet vector comprises, for each vehicle in the target fleet, generating a simulated vehicle vector based on a corresponding target vehicle vector and the plurality of reference vehicle vectors using the distance metric.

In some examples, using a simulated fleet, the fleet comparison engine 110 may generate estimated or projected operational parameters based on a change to the simulated fleet relative to the target fleet. In one example, the fleet comparison engine 110 may replace a target vehicle within the target fleet with a newer vehicle and estimate operational parameter such as fuel efficiency (fleet miles per gallon), utilization, mean time between failure, etc. Other changes may include modifying engine horsepower of a vehicle, adding aeropackages to vehicles, adjustments to driver behavior (less idling), adjustments in route planning, changes in maintenance frequency, etc.

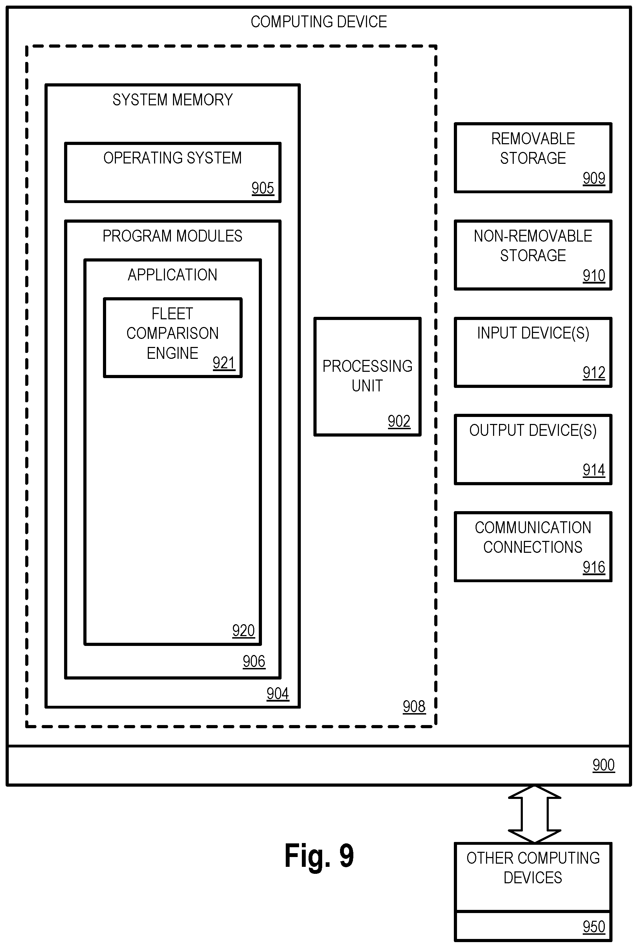

Fig. 9 and the associated description provides a discussion of a variety of operating environments in which aspects of the disclosure may be practiced. However, the devices and systems illustrated and discussed with respect to Fig. 9 is for purposes of example and illustration and are not limiting of a vast number of computing device configurations that may be utilized for practicing aspects of the disclosure, as described herein.

Fig. 9 is a block diagram illustrating physical components (e.g., hardware) of a computing device(s) 900 with which aspects of the disclosure may be practiced. While one computing device is shown, it should be understood that the present invention can be carried out on multiple computing devices. The computing device components described below may have computer executable instructions for implementing a fleet management application 920 on a computing device (e.g., fleet comparison engine 110), including computer executable instructions for fleet management application 920 that can be executed to implement the methods disclosed herein. In a basic configuration, the computing device 900 may include at least one processing unit 902 and a system memory 904. Depending on the configuration and type of computing device, the system memory 904 may comprise, but is not limited to, volatile storage (e.g., random access memory), non-volatile storage (e.g., read-only memory), flash memory, or any combination of such memories. The system memory 904 may include an operating system 905 and one or more program modules 906 suitable for running fleet management application 920, such as one or more components with regard to Figs. 1 and 3 and, in particular, fleet comparison engine 921 (e.g., corresponding to fleet comparison engine 110).

The operating system 905, for example, may be suitable for controlling the operation of the computing device 900. Furthermore, embodiments of the disclosure may be practiced in conjunction with a graphics library, other operating systems, or any other application program and is not limited to any particular application or system. This basic configuration is illustrated in Fig. 9 by those components within a dashed line 908. The computing device 900 may have additional features or functionality. For example, the computing device 900 may also include additional data storage devices (removable and/or non-removable) such as, for example, magnetic disks, optical disks, or tape. Such additional storage is illustrated in Fig. 9 by a removable storage device 909 and a non-removable storage device 910.

As stated above, a number of program modules and data files may be stored in the system memory 904. While executing on the processing unit 902, the program modules 906 (e.g., fleet management application 920) may perform processes including, but not limited to, the aspects, as described herein. Other program modules that may be used in accordance with aspects of the present disclosure, and in particular for identifying a remediation action for fleet management, may include fleet comparison engine 921.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. For example, embodiments of the disclosure may be practiced via a system-on-a-chip (SOC) where each or many of the components illustrated in Fig. 9 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the capability of client to switch protocols may be operated via application-specific logic integrated with other components of the computing device 900 on the single integrated circuit (chip). Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general purpose computer or in any other circuits or systems.

The computing device 900 may also have one or more input device(s) 912 such as a keyboard, a mouse, a pen, a sound or voice input device, a touch or swipe input device, etc. The output device(s) 914 such as a display, speakers, a printer, etc. may also be included. The aforementioned devices are examples and others may be used. The computing device 900 may include one or more communication connections 916 allowing communications with other computing devices 950. Examples of suitable communication connections 916 include, but are not limited to, radio frequency (RF) transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 904, the removable storage device 909, and the non-removable storage device 910 are all computer storage media examples (e.g., memory storage). Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 900. Any such computer storage media may be part of the computing device 900. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

The use of any and all examples, or exemplary language (e.g., "such as") provided herein, is intended merely to better illuminate the disclosed embodiments and does not pose a limitation on the scope of the disclosed embodiments unless otherwise claimed. Numerous modifications and adaptations will be readily apparent to those of ordinary skill in this art.

## Claims

1. A method for fleet management, the method comprising:
receiving fleet management data for a target fleet of vehicles;
generating a target vehicle vector that represents a target vehicle of the target fleet based on the fleet management data;
identifying one or more similar vehicles, from a plurality of reference vehicles, that are similar to the target vehicle using a distance metric between the target vehicle vector and a plurality of reference vehicle vectors, the plurality of reference vehicle vectors representing the plurality of reference vehicles;
identifying vehicle characteristics of the target vehicle and the one or more similar vehicles, the vehicle characteristics affecting vehicle efficiency of the target vehicle; and
displaying the vehicle characteristics affecting vehicle efficiency of the target vehicle and corresponding vehicle characteristics of the one or more similar vehicles.

2. The method of claim 1, wherein receiving the fleet management data comprises receiving a maintenance history for the target fleet of vehicles.

3. The method of any of the preceding claims, further comprising determining a remediation action for management of the target vehicle based on the vehicle characteristics affecting vehicle efficiency of the target vehicle.

4. The method of claim 3, further comprising:
generating a target fleet vector that represents the target fleet based on the fleet management data;
generating a simulated fleet vector based on the target fleet vector and a plurality of reference fleet vectors using the distance metric, the plurality of reference fleet vectors representing a plurality of reference fleets of vehicles, wherein the simulated fleet vector represents a simulated fleet of vehicles; and
determining the remediation action for management of the target fleet based on the simulated fleet vector;
wherein generating the target fleet vector comprises generating, for each vehicle in the target fleet, a respective target vehicle vector that represents the vehicle.

5. The method of claim 4, wherein generating the simulated fleet vector comprises, for each vehicle in the target fleet, generating a simulated vehicle vector based on a corresponding target vehicle vector and the plurality of reference vehicle vectors using the distance metric.

6. The method of either claim 4 or 5, wherein the distance metric is a Manhattan distance metric.

7. The method of any of claims 4-6, wherein identifying the one or more similar vehicles comprises:
sorting the plurality of reference vehicles and the target fleet of vehicles into a plurality of groups using a similarity algorithm; and
calculating the distance metric between vehicles within a group of the plurality of groups.

8. The method of any of claims 4-7, wherein:
the fleet management data represents a workload of the target fleet of vehicles; and
the simulated fleet of vehicles is generated to perform the workload of the target fleet of vehicles.

9. The method of claim 8, wherein the simulated fleet of vehicles includes at least one target vehicle from the target fleet of vehicles having a modification indicated by the remediation action.

10. The method of any of claims 8 or 9, wherein:
the simulated fleet of vehicles has a different number of vehicles than the target fleet of vehicles; and
a vehicle addition to or a vehicle removal from the target fleet of vehicles is indicated by the remediation action.

11. A system for fleet management, the system comprising:
a processor; and
a non-transitory computer-readable memory having computer-readable instructions that, when executed by a processor, cause the processor to:
receive fleet management data for a target fleet of vehicles;
generate a target vehicle vector that represents a target vehicle of the target fleet based on the fleet management data;
identify one or more similar vehicles, from a plurality of reference vehicles, that are similar to the target vehicle using a distance metric between the target vehicle vector and a plurality of reference vehicle vectors, the plurality of reference vehicle vectors representing the plurality of reference vehicles;
identify vehicle characteristics of the target vehicle and the one or more similar vehicles, the vehicle characteristics affecting vehicle efficiency of the target vehicle; and
display the vehicle characteristics affecting vehicle efficiency of the target vehicle and corresponding vehicle characteristics of the one or more similar vehicles.

12. The system of claim 11, wherein the computer-readable instructions further cause the processor to:
receive a maintenance history for the target fleet of vehicles.

13. The system of any of claims 11 or 12, wherein the computer-readable instructions further cause the processor to:
determine a remediation action for management of the target vehicle based on the vehicle characteristics affecting vehicle efficiency of the target vehicle.

14. The system of claim 13, wherein the computer-readable instructions further cause the processor to:
generate a target fleet vector that represents the target fleet based on the fleet management data;
generate a simulated fleet vector based on the target fleet vector and a plurality of reference fleet vectors using the distance metric, the plurality of reference fleet vectors representing a plurality of reference fleets of vehicles, wherein the simulated fleet vector represents a simulated fleet of vehicles; and
determine the remediation action for management of the target fleet based on the simulated fleet vector;
wherein generating the target fleet vector comprises generating, for each vehicle in the target fleet, a respective target vehicle vector that represents the vehicle.

15. The system of claim 14, wherein the computer-readable instructions further cause the processor to:
for each vehicle in the target fleet, generate a simulated vehicle vector based on a corresponding target vehicle vector and the plurality of reference vehicle vectors from the plurality of reference fleet vectors using the distance metric.

16. The system of claim 15, wherein the distance metric is a Manhattan distance metric.

17. The system of any of claims 15 or 16, wherein the computer-readable instructions further cause the processor to:
sort the plurality of reference vehicles and the target fleet of vehicles into a plurality of groups using a similarity algorithm; and
calculate the distance metric between vehicles within a group of the plurality of groups.

18. The system of any of claims 14-17, wherein:
the fleet management data represents a workload of the target fleet of vehicles; and
the simulated fleet of vehicles is generated to perform the workload of the target fleet of vehicles.

19. The system of claim 18, wherein the simulated fleet of vehicles includes at least one target vehicle from the target fleet of vehicles having a modification indicated by the remediation action.

20. The system of any of claims 18 or 19, wherein:
the simulated fleet of vehicles has a different number of vehicles than the target fleet of vehicles; and
a vehicle addition to or a vehicle removal from the target fleet of vehicles is indicated by the remediation action.
